# EUROPEAN PATENT SPECIFICATION

(11) **EP 4 554 981 B1**
(45) Date of publication and mention of the grant of the patent: **22.04.2026**
(21) Application number: 23738757.6
(22) Date of filing: 06.07.2023
(51) Int. Cl.: C08B 37/00, A61K 31/715, C08L 5/10

(54) **SYNTHETIC HEXASACCHARIDES MIMICS OF HEPARIN SHOWING HEPARANASE INHIBITION ACTIVITY**
SYNTHETISCHE HEXASACCHARIDE, WELCHE HEPARIN NACHAHMEN UND HEPARANASEHEMMWIRKUNG AUFWEISEN
MIMÉTIQUES D'HEXASACCHARIDES SYNTHÉTIQUES D'HÉPARINE PRÉSENTANT UNE ACTIVITÉ D'INHIBITION DE L'HÉPARANASE

(30) Priority: 14.07.2022 IT 202200014806
(43) Date of publication of application: 21.05.2025
(73) Proprietor: Centro Alta Tecnologia Istituto di Ricerche Chimiche e Biochimiche G. Ronzoni S.r.l., 20133 Milano (IT)
(72) Inventor: NAGGI, Annamaria, 20133 Milan (IT); PETITOU, Maurice, 20133 Milan (IT); NI, Ming Hong, 20133 Milan (IT)
(74) Representative: Serravalle, Marco
(86) International application number: PCT/EP2023/068684
(87) International publication number: WO 2024/012972

(56) References cited:
- VLODAVSKY I ET AL: "Heparanase : structure , biological functions, and inhibition by heparin-derived mimetics of heparan sulfate", CURRENT PHARMACEUTICAL DESIGN, BENTHAM SCIENCE PUBLISHERS, NL, vol. 13, no. 20, 1 January 2007 (2007-01-01), pages 2057 - 2073, XP002516660, ISSN: 1381-6128, DOI: 10.2174/138161207781039742

## Description

### Field of the invention

The present invention is directed to synthetic hexasaccharides showing remarkable heparanase inhibition activity.

### Background of the invention

Heparan sulfate (HS) refers to a family of glycosaminoglycan chains present in about 20 glycoproteins, the proteoglycans (PG), distributed mainly in the extracellular matrix and at the cell surface, but also inside the cell (Thibault Annaval et al., Heparan Sulfate Proteoglycans Biosynthesis and Post Synthesis Mechanisms Combine Few Enzymes and Few Core Proteins to Generate Extensive Structural and Functional Diversity, Molecules, 2020, 25, 4215; doi: 10.3390/molecules25184215). PGs exert their biological functions by interacting with a vast array of protein ligands including the most recently discovered SARS-CoV-2 (Thomas Mandel Clausen et al, SARS-CoV-2 Infection Depends on Cellular Heparan Sulfate and ACE2. Cell 183, 1-15, November 12, 2020).

Heparanase (HPSE) is a β-D-endoglycosidase capable of cleaving the HS chains of proteoglycans and thus to regulate the function of many proteins interacting with HS. HS cleavage by heparanase may affect diverse biological processes like, for instance, inflammation, angiogenesis and cell migration (R. Goldberg et al., Versatile role of heparanase inflammation, Matrix. Biology, 2013,32(5), 234-240) through release and activation of growth factors, cytokines and other bioactive molecules, the end result being tumor growth and metastasis (I. Vlodavsky et al., Heparanase: Structure, Biological Function, and Inhibition by Heparin-Derived Mimetics of Heparan Sulfate, Current Pharmaceutical Design, 13(2007), 2057-2073). HPSE is also involved in diabetes and arteriosclerosis diseases. Increased levels of HPSE have recently been found in Covid-19 patients (B. Buijsers et al., C, Front. Immunol. 11:545047. doi: 10.3389/fimmu.2020.545047). HPSE is the only enzyme in mammals capable of this activity. A second heparanase has been discovered, heparanase-2, but it is devoid of enzymatic activity.

WO 2015/062951 discloses a process for the preparation of a glucosaminoglycan derivative inhibiting heparanase, comprising: N-desulfation of from 25% to 100% of the N-sulfated residues of a glucosaminoglycan; oxidation, preferably by periodate at a pH of from 5.5 to 10.0, of from 25% to 100% of the 2-N-, 3-O-non-sulfated glucosamine residues and of the 2-O-non-sulfated uronic acid residues of said glucosaminoglycan, under conditions effective to convert adjacent diols and adjacent OH/NH₂ to aldehydes; reduction, preferably by sodium borohydride, of said oxidized glucosaminoglycan, under conditions effective to convert said aldehydes to alcohols. The document discloses that, by reducing Mw, IC₅₀ increases up to 750 ng/ml for a Mw of about 5 kDa.

Minghong Ni et al., (Investigating Glycol-Split-Heparin-Derived Inhibitors of Heparanase: A Study of Synthetic Trisaccharides Molecules 2016, 21, 1602; doi:10.3390/molecules21111602) disclose trisaccharides with heparanase inhibition property; however, the compound GlcN(Ns,6s)-GlcA(gs)-GlcN(Ns,1,6anh) shows an IC₅₀ of 2000 ng/ml.

It would be therefore important to develop synthetic compounds which show a good activity as HPSE inhibitors.

### Summary of the invention

The present invention is directed to a new class of hexasaccharides mimetics of heparin presenting a significant heparanase inhibition activity. The compounds have structure: 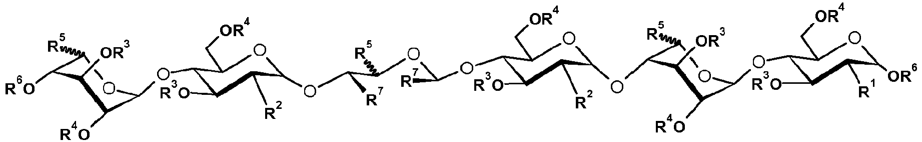 Wherein R¹ is selected from the group consisting of NH₂, NHSO₃Na, NHAc; R² is selected from the group consisting of NH₂, NHSO₃Na, NHAc; R³ is selected from the group consisting of Bn, H; R⁴ is selected from the group consisting of Ac, H, SO₃Na; R⁵ is CO₂Na; R⁶ is selected from the group consisting of Me, Ethyl, Alkyl, alkyl azide, alkynyl, cholestanol aglycon; R⁷ is selected from the group consisting of CH₂OH, COOH.

### Detailed description of the invention

The hexasaccharides according to the present invention are obtainable by glycosplit reaction of a uronic acid ring of the following hexasaccharide: 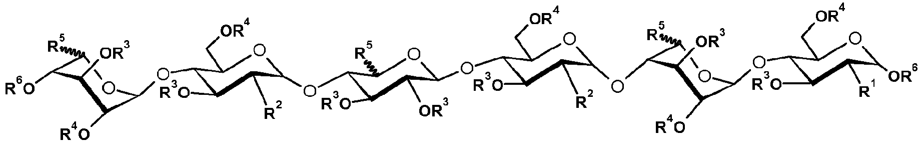 Wherein R¹, R², R³, R⁴, R⁵, R⁶ and R⁷ have the above defined meanings. The hexasaccharide is composed of alternating rings of glucosamine sulfate and uronic acid. The term uronic acid comprises both iduronic acid and glucuronic acid.

In a preferred embodiment, the hexasaccharides have formula:

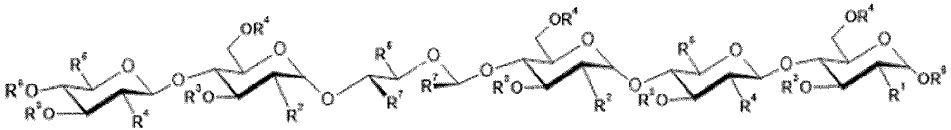

In another preferred embodiment, the hexasaccharides have formula:

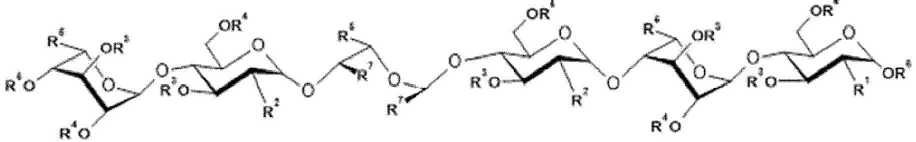

In another preferred embodiment, the hexasaccharides have formula: 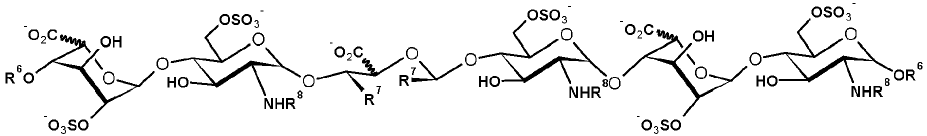 Wherein R⁶ and R⁷ have the above defined meanings, R⁸ is selected from the group consisting of SO₃Na, Ac.

When the gs ring is a glucuronic acid ring, the hexasaccharides have formula:

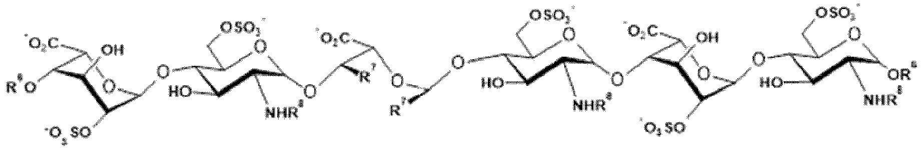

When the gs ring is an iduronic acid ring, the hexasaccharides have formula:

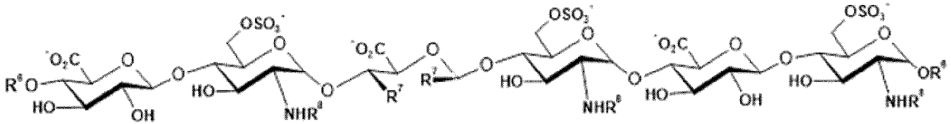

The compounds according to the invention can be prepared starting from the pivotal hexasaccharide 12,13 and 16 (Scheme 1) that after functionalization presents a single residue (glucuronic acid) susceptible to periodate oxidation, and from which different target structures (**13-18**) can be derived.

To prepare **12** we adopted (Scheme 1) a classical disaccharide building-block approach (C. Tabeur et al., Oligosaccharides corresponding to the regular sequence of heparin: chemical synthesis and interaction with FGF-2. Bioorg. Med. Chem. 1999, 7, 2003-2012) based on the trichloroacetimidate glycosylation method (R.R. Schmidt, W. Kinzy, Adv. Carbohydr. Chem. Biochem. 1992, 50, 21-123). The fully orthogonally protected hexasaccharide **9** was thus obtained from the known (M. Petitou et al., Synthesis of Heparin Fragments: A α-methyl Pentaoside with High Affinity for Antithrombin II, Carbohy. Res. 1987, 167, 67-75) **3** that was first coupled with the known **2** (C. A.A. van Boeckel et al., Synthesis of a Pentasaccharide Corresponding to the Antithrombin III Binding Fragment of Heparin, Journal of Carbohydrate Chemistry,1985, 4(3), 293-321, https://doi.org/10.1080/07328308508070182), in the presence of tert-butyldimethylsilyl triflate, in dichloromethane at -30 °C to give the tetrasaccharide **4** in 65% yield. The hexasaccharide sequence was completed by reaction under similar conditions with the trichloroacetimidate disaccharide **8** itself classically obtained from **6.** A mixture of the two anomers was formed (56%, α/β = 4/1). After saponification to remove the acetyl groups and cleave the methyl esters, preparative HPLC allowed to separate **10** from its β-anomer. Following *O-*sulfation (**11**) and hydrogenolysis, **12** was in part *N*-sulfated by sulfur trioxide pyridine complex in aqueous sodium hydrogen carbonate to obtain **13** (78%), it was also in part N-acetylated by acetic anhydride in aqueous sodium hydrogen carbonate to give **16** (75%). The glycol-split derivatives were then obtained (Scheme 2). After periodate oxidative cleavage of **13** the resulting dialdehyde, that was not isolated, was reduced into **14** using sodium borohydride, or further oxidized by NaClO₂ in the presence of NaH₂PO₄ buffer at pH 5 (Pinnick oxidation) to give **15** (yield: 39%, 2 steps) after purification by an anionic exchanging column Mono Q, desalting and lyophilization. The same oxidation method yielded **17** and **18** from **16.** All the structures of final products were confirmed by ¹H- and ¹³C-NMR analysis (HSQC-dept, COSY, TOCSY, HMBC) and LC-MS.The inhibition of heparanase was evaluated using an assay based on the cleavage of the synthetic heparin pentasaccharide fondaparinux (Arixtra^{®}; Aspen). Cleavage of fondaparinux by heparanase, yields a disaccharide that is assayed by colorimetry. The assay was essentially performed as described by Hammond (E. Hammond, C.P. Li, V. Ferro, Development of a colorimetric assay for heparanase activity suitable for kinetic analysis and inhibitor screening, Anal. Biochem. 396(2010), 112-116, http://doi.10.1016/j.ab.2009.09.007.

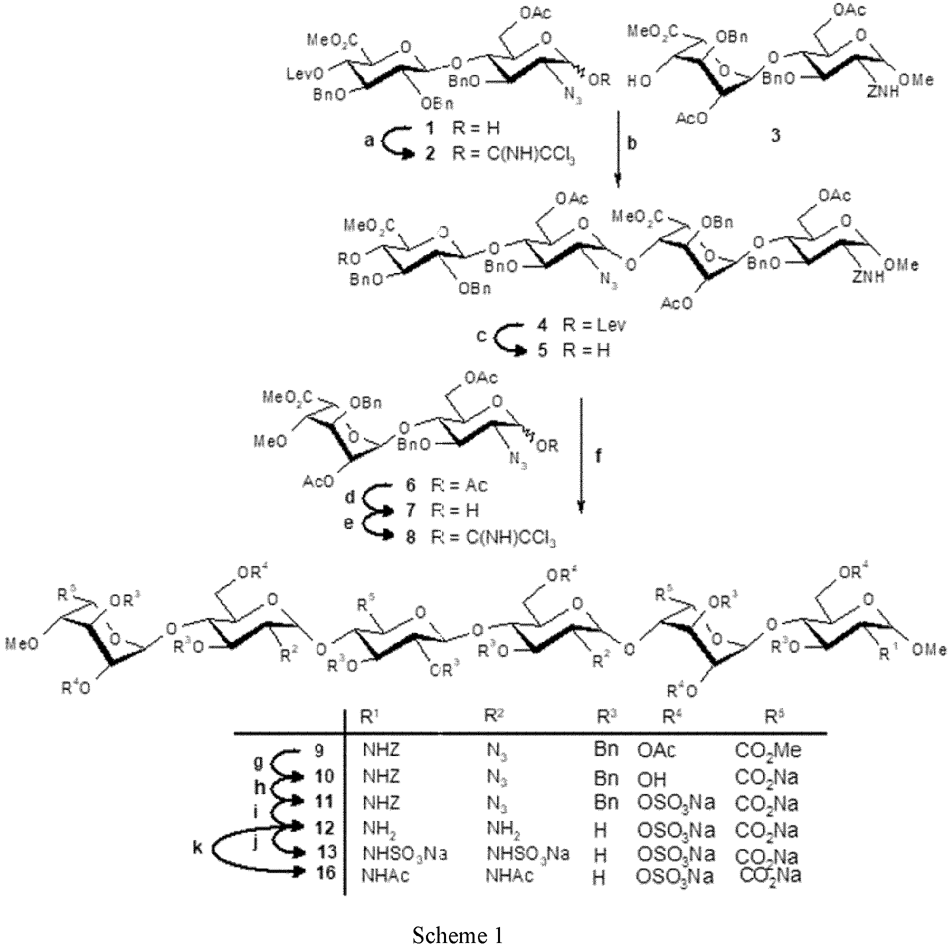

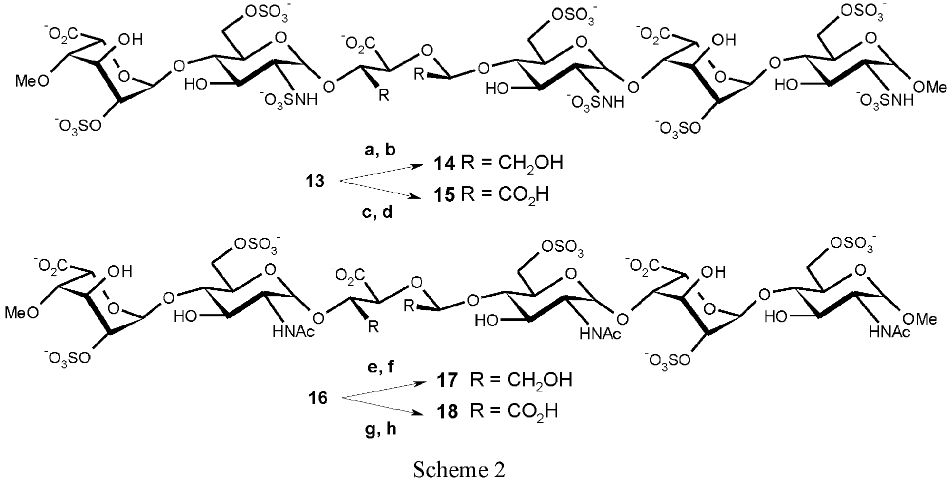

Serial dilutions of the compounds and of the reference roneparstat were tested. IC₅₀ values were ultimately determined using GraphPad software. The results are reported Table 1. Inhibition by hexasaccharides **12, 13** and **16** (Scheme 1), comprising an intact glucuronic acid unit was hardly detectable over the concentration range tested, with a tendency however for a better inhibition when the glucosamine units are N-sulfated rather than N-acetylated. This tendency was again observed after periodate cleavage (**14** vs **17)** and particularly after introduction of the two carboxylic acid functions **(15** and **18).** Thus, the N-sulfated hexasaccharide **15** displayed an IC₅₀ of 70 nM (Scheme 2). Comparing the activity of **12** and **16** with other derivatives, our results clearly demonstrate the critical role played by gs and gs-ox uronic acid units. Comparison of the activities of **15** and **18,** it appears that N-sulfated glucosamine are preferred over N-acetylated ones, despite the fact that in roneparstat N-acetyl groups only are present.

**Table 1**

| **Compound No.** | **IC₅₀** | |
|---|---|---|
| | **µg/ml** | **µM** |
| Roneparstat | 0.006 | |
| **12** | 50 | 30 |
| **13** | >50 | >26 |
| **14** | **10** | **5** |
| **15** | **0.15** | **0.07** |
| **16** | inactive | |
| **17** | **inactive** | |
| **18** | **38** | **21** |

. In order to estimate the inhibition properties of a iduronic gs ring when compared to a glucuronic gs ring, trisaccharides corresponding to the three central rings of the structure (gs ring plus one ring on each side) have been prepared both with an iduronic ring and a glucuronic ring. The synthetic route is shown in Scheme 3.

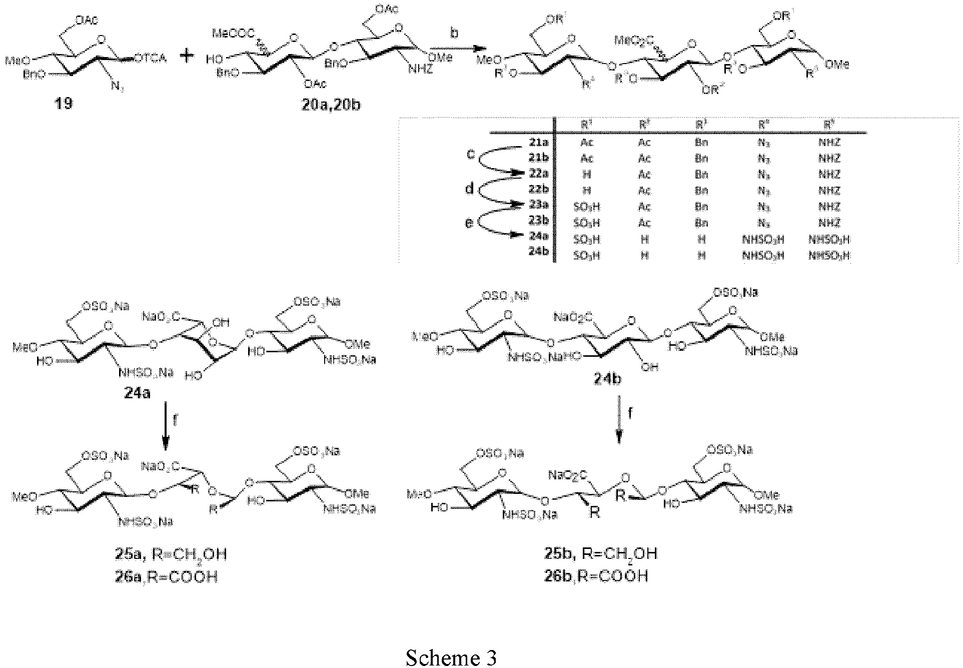

**.** Trisaccharide 21a and 21b were obtained by coupling monosaccharide 19 (Minghong Ni et al., Investigating Glycol-Split-Heparin-Derived Inhibitors of Heparanase: A Study of Synthetic Trisaccharides, Molecules 2016, 21, 1602;) to 20a (M. Petitou et al., Synthesis of heparin fragments: A methyl α-pentaoside with high affinity for antithrombin III, Carbohydr. Res. 167(1987),67-75,) or 20b which was epimerized by DBU in DMF from 20a. The activator used in glycosylation reaction was TMSOTf/CH2Cl2/-20°C. Given the oligosaccharide's structure, it is needed to protect and deprotect orthogonally the hydroxyl group from time to time (V. Dimakos, et al, Site-Selective Functionalization of Hydroxyl Groups in Carbohydrate Derivatives, Chem. Rev. 118 (2018) 11457-11517). This may result in cumbersome multi-steps preparation. Among selective methods allowing to protect or deprotect one position among several bearing the same function, Magnesium methoxide in methanol (G. Tiruchinapally et al., Divergent Heparin Oligosaccharide Synthesis with Preinstalled Sulfate Esters, Chemistry, 17(2011), 10106-10112) was chosen and optimized (4 equiv. Mg(OH)2 at -10°C for 3-4 h) to selective deacetylate 21a and 21b in a satisfied yield 45-55%. After O-sulfation, saponification, hydrogenolysis and N-sulfation, 24a and 24b were obtained. 24a and 24b were subsequently oxidized by sodium periodate, reduced by sodium borohydride (called gs) to give 25a and 25b. 24a and 24b were oxidized by sodium periodate and further oxidized by NaClO2 (Pinnick oxidation) (called gs,ox) to give 26a and 26b.

**.** The activity of the different compounds is shown in Table 2. It is possible to note that the compounds containing a glucuronic ring are in general more active than compounds comprising a iduronic ring. It is expected that this trend is also valid for hexasaccharide structures according to the invention.

**Table 2**

| Trisaccharide Compound | IC₅₀ | |
|---|---|---|
| | (µg/ml) | µM (nmol/ml) |
| Roneparstat | 0.006 | |
| 24a (gluco) | 39 | 40.0 |
| 25a (gluco gs) | 37 | 37.9 |
| 26a (gluco di-carbossi) | Inactive | - |
| 24b (ido) | Inactive | - |
| 25b (ido gs) | 75 | 76.8 |
| 26b (ido di-carbossi) | 75 | 71.6 |

## Claims

1. An hexasaccharide having formula 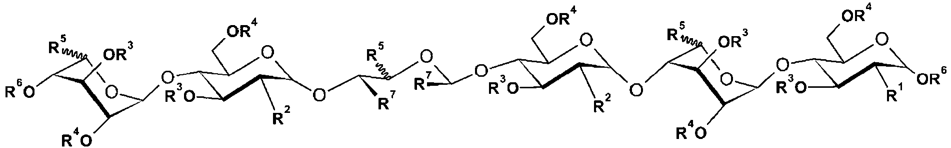
wherein R¹ is selected from the group consisting of NH₂, NHSO₃Na, NHAc;
R² is selected from the group consisting of NH₂, NHSO₃Na, NHAc;
R³ is selected from the group consisting of Bn, H;
R⁴ is selected from the group consisting of Ac, H, SO₃Na;
R⁵ is CO₂Na;
R⁶ is selected from the group consisting of Me, Ethyl, Alkyl, alkyl azide, alkynyl, cholestanol aglycon;
R⁷ is selected from the group consisting of CH₂OH, COOH.

2. The hexasaccharide according to claim 1 wherein the hexasaccharide has formula:

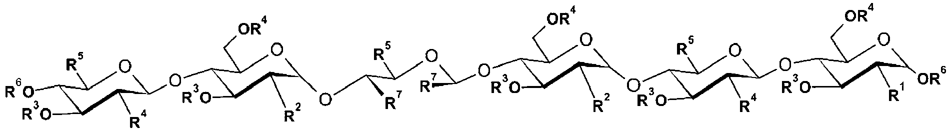

3. The hexasaccharide according to claim 1 wherein the hexasaccharide has formula:

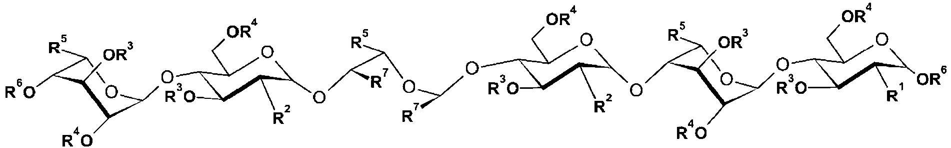

4. The hexasaccharide according to claim 1 wherein the hexasaccharide has formula 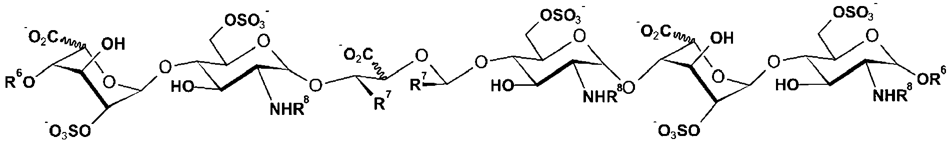
wherein R⁶ is selected from the group consisting of Me, Ethyl, Alkyl, alkyl azide, alkynyl, cholestanol aglycon;
R⁷ is selected from the group consisting of CH₂OH, COOH;
R⁸ is selected from the group consisting of SO₃Na, Ac.

5. The hexasaccharide according to claim 4 wherein the hexasaccharide has formula:

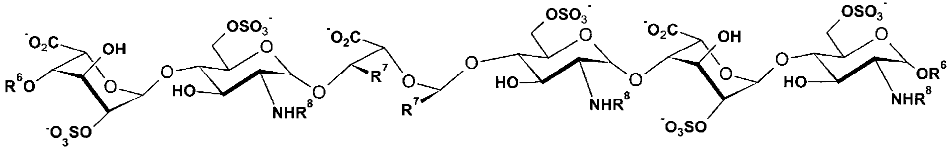

6. The hexasaccharide according to claim 4 wherein the hexasaccharide has formula:

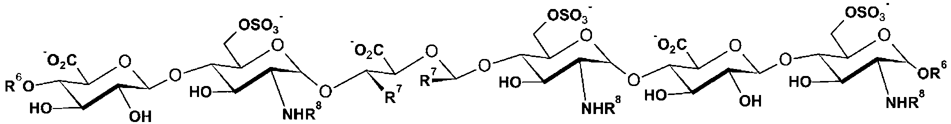

7. An hexasaccharide of formula: 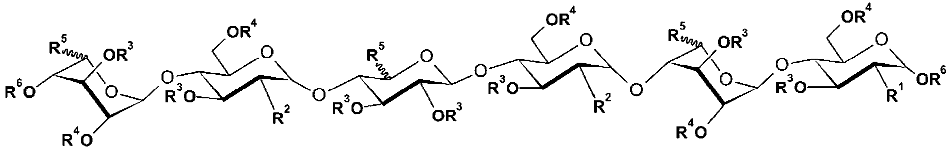
wherein R¹ is selected from the group consisting of NH₂, NHSO₃Na, NHAc;
R² is selected from the group consisting of NH₂, NHSO₃Na, NHAc;
R³ is selected from the group consisting of Bn, H;
R⁴ is selected from the group consisting of Ac, H, SO₃Na;
R⁵ is CO₂Na;
R⁶ is selected from the group consisting of Me, Ethyl, Alkyl, alkyl azide, alkynyl, cholestanol aglycon;
R⁷ is selected from the group consisting of CH₂OH, COOH.

## Patentansprüche

1. Ein Hexasaccharid mit der Formel 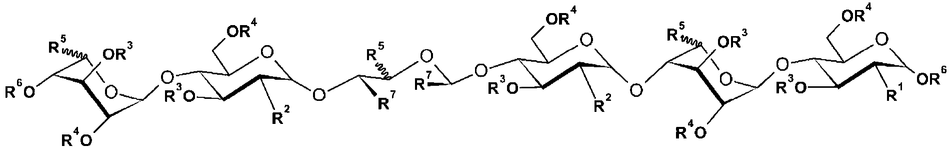
wobei R¹ aus der Gruppe bestehend aus NH₂, NHSO₃Na, NHAc ausgewählt ist;
R² aus der Gruppe bestehend aus NH₂, NHSO₃Na, NHAc ausgewählt ist;
R³ aus der Gruppe bestehend aus Bn, H ausgewählt ist;
R⁴ aus der Gruppe bestehend aus Ac, H, SO₃Na ausgewählt ist;
R⁵ CO₂Na ist;
R⁶ aus der Gruppe bestehend aus Me, Ethyl, Alkyl, Alkylazid, Alkynyl, Cholestanol-Aglykon ausgewählt ist;
R⁷ aus der Gruppe bestehend aus CH₂OH, COOH ausgewählt ist.

2. Das Hexasaccharid nach Anspruch 1, wobei das Hexasaccharid die Formel hat:

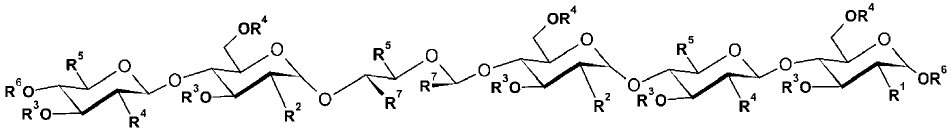

3. Das Hexasaccharid nach Anspruch 1, wobei das Hexasaccharid die Formel hat:

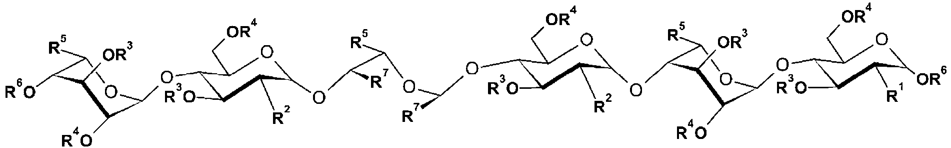

4. Das Hexasaccharid nach Anspruch 1, wobei das Hexasaccharid die Formel hat 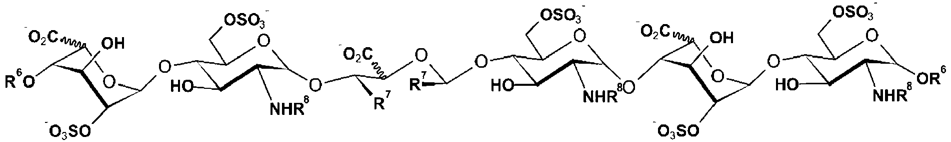
wobei R⁶ aus der Gruppe bestehend aus Me, Ethyl, Alkyl, Alkylazid, Alkynyl, Cholestanol-Aglykon ausgewählt ist;
R⁷ aus der Gruppe bestehend aus CH₂OH, COOH ausgewählt ist;
R⁸ aus der Gruppe bestehend aus SO₃Na, Ac ausgewählt ist.

5. Das Hexasaccharid nach Anspruch 4, wobei das Hexasaccharid die Formel hat:

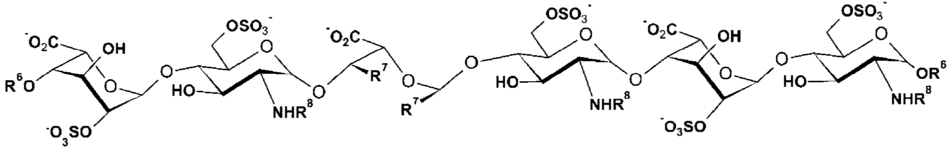

6. Das Hexasaccharid nach Anspruch 4, wobei das Hexasaccharid die Formel hat:

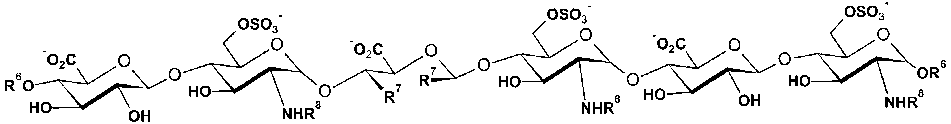

7. Ein Hexasaccharid der Formel: 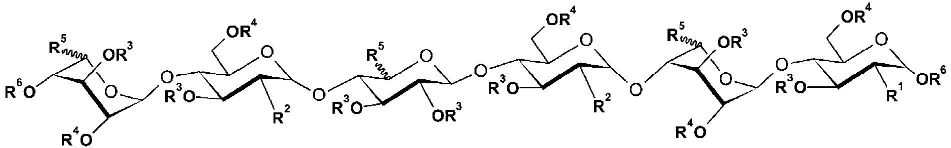
wobei R¹ aus der Gruppe bestehend aus NH₂, NHSO₃Na, NHAc ausgewählt ist;
R² aus der Gruppe bestehend aus NH₂, NHSO₃Na, NHAc ausgewählt ist;
R³ aus der Gruppe bestehend aus Bn, H ausgewählt ist;
R⁴ aus der Gruppe bestehend aus Ac, H, SO₃Na ausgewählt ist;
R⁵ CO₂Na ist;
R⁶ aus der Gruppe bestehend aus Me, Ethyl, Alkyl, Alkylazid, Alkynyl, Cholestanol-Aglykon ausgewählt ist;
R⁷ aus der Gruppe bestehend aus CH₂OH, COOH ausgewählt ist.

## Revendications

1. Un hexasaccharide ayant la formule 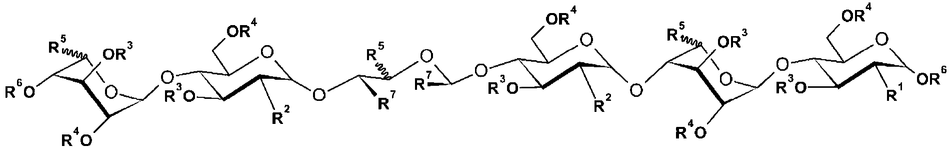
dans laquelle R¹ est choisi dans le groupe constitué de NH₂, NHSO3Na, NHAc;
R² est choisi dans le groupe constitué de NH₂, NHSO₃Na, NHAc;
R³ est choisi dans le groupe constitué de Bn, H;
R⁴ est choisi dans le groupe constitué de Ac, H, SO₃Na;
R⁵ est CO₂Na;
R⁶ est choisi dans le groupe constitué de Me, Ethyl, Alkyl, azide d'alkyle, alkynyle, aglycone de cholestanol;
R⁷ est choisi dans le groupe constitué de CH₂OH, COOH.

2. L'hexasaccharide selon la revendication 1, dans lequel l'hexasaccharide a la formule:

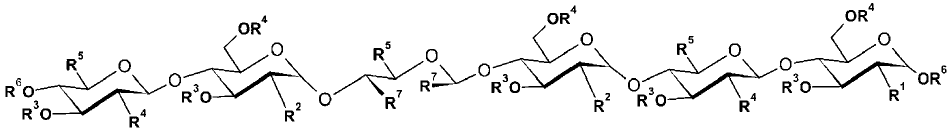

3. L'hexasaccharide selon la revendication 1, dans lequel l'hexasaccharide a la formule:

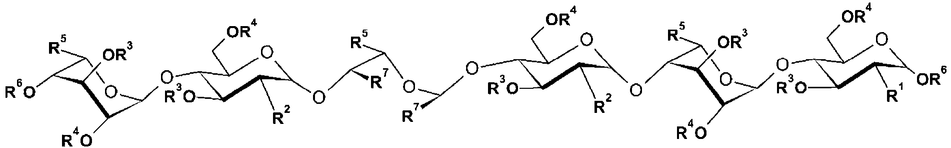

4. L'hexasaccharide selon la revendication 1, dans lequel l'hexasaccharide a la formule 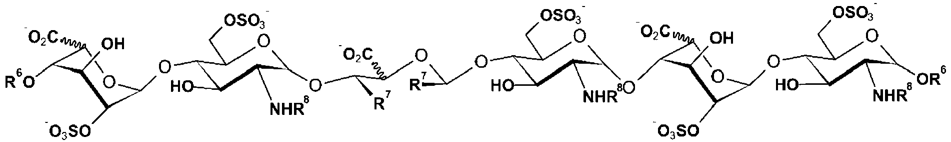
dans laquelle R⁶ est choisi dans le groupe constitué de Me, Ethyl, Alkyl, azide d'alkyle, alkynyle, aglycone de cholestanol;
R⁷ est choisi dans le groupe constitué de CH₂OH, COOH;
R⁸ est choisi dans le groupe constitué de SO₃Na, Ac.

5. L'hexasaccharide selon la revendication 4, dans lequel l'hexasaccharide a la formule :

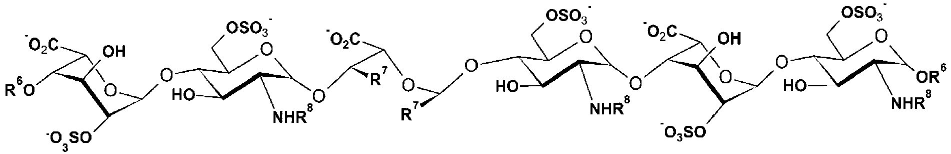

6. L'hexasaccharide selon la revendication 4, dans lequel l'hexasaccharide a la formule :

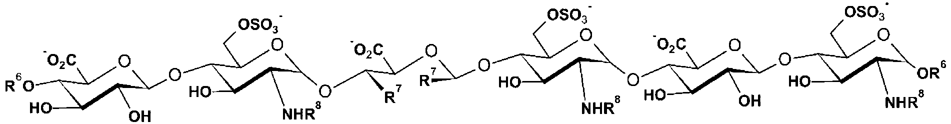

7. Un hexasaccharide de formule : 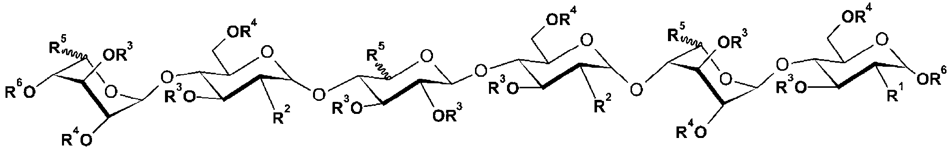
dans laquelle R¹ est choisi dans le groupe constitué de NH₂, NHSO₃Na, NHAc;
R² est choisi dans le groupe constitué de NH₂, NHSO₃Na, NHAc;
R³ est choisi dans le groupe constitué de Bn, H;
R⁴ est choisi dans le groupe constitué de Ac, H, SO3Na;
R⁵ est CO₂Na;
R⁶ est choisi dans le groupe constitué de Me, Ethyl, Alkyl, azide d'alkyle, alkynyle, aglycone de cholestanol;
R⁷ est choisi dans le groupe constitué de CH₂OH, COOH.
